# FASCICULE DE BREVET EUROPEEN

(11) **EP 4 639 725 B1**
(45) Date de publication et mention de la délivrance du brevet: **02.09.2026**
(21) Numéro de dépôt: 23833360.3
(22) Date de dépôt: 14.12.2023
(51) Int. Cl.: H02K 1/276, F16H 1/22, B60K 1/02, H02K 7/116, H02K 16/00

(54) **SYSTÈME DE PROPULSION POUR VÉHICULE ÉLECTRIQUE OU HYBRIDE**
ANTRIEBSSYSTEM FÜR EIN ELEKTRO- ODER HYBRIDFAHRZEUG
DRIVE SYSTEM FOR AN ELECTRIC OR HYBRID VEHICLE

(30) Priorité: 19.12.2022 FR 2213850
(43) Date de publication de la demande: 29.10.2025
(73) Titulaire: VALEO EMBRAYAGES, 80009 Amiens (FR)
(72) Inventeur: VERHOOG, Roël, 80009 AMIENS (FR); RUMEAU, Eric, 80009 AMIENS (FR); FOUCART, Gregory, 80009 AMIENS (FR)
(74) Mandataire: Valeo Powertrain Systems
(86) Numéro de dépôt international: PCT/EP2023/085877
(87) Numéro de publication internationale: WO 2024/132854

(56) Documents cités:
- WO-A1-2020/020440
- CN-A- 112 572 131
- GB-A- 2 591 094
- US-A1- 2002 084 120
- US-B1- 6 401 849

## Description

### DOMAINE TECHNIQUE DE L'INVENTION

L'invention se rapporte à un système de propulsion pour véhicule électrique ou hybride. Ce système de propulsion comprend notamment plusieurs machines électriques fournissant un couple moteur et au moins une succession de trains d'engrenage destinés à être raccordé aux roues du véhicule. De manière optionnelle, le système de propulsion peut comprendre des systèmes de couplage sélectif distincts capables de fournir plusieurs rapports de réduction de vitesse et plusieurs modes de fonctionnement distincts à l'utilisateur du véhicule. Lorsque le véhicule comprend également un moteur thermique accouplé aux machines électriques, le véhicule est dit « hybride » du fait que la propulsion du véhicule puisse se faire soit de manière purement électrique, soit de manière purement thermique ou de manière hybride en utilisant les deux types d'énergie simultanément.

Dans le cas d'un véhicule à propulsion purement électrique, c'est à dire dépourvu de moteur thermique, la fourniture d'électricité peut être réalisée à l'aide de batterie ou au moyen d'une pile à combustible utilisant l'hydrogène comme combustible réducteur. Le véhicule électrique peut être un véhicule automobile ou un véhicule industriel, tel qu'un poids lourd, un autobus ou un tracteur.

### ÉTAT DE LA TECHNIQUE ANTÉRIEURE

On connaît par exemple un tel système de propulsion de la demande de brevet DE102011056048 A1. Ce système de propulsion comporte une première machine électrique réversible et une deuxième machine électrique réversible rapportées sur un carter de transmission, une transmission agencée pour transmettre un couple depuis les machines électriques à une paire de roues entraînées d'un véhicule en passant notamment par un arbre d'entrainement commun. La disposition des machines électriques se fait de manière symétrique par rapport à l'arbre d'entrainement commun. Ainsi, chacune des machines électriques comprend un pignon conçu comme une roue droite relié de manière solidaire en rotation à l'arbre de sortie du rotor. Les pignons affectés aux deux arbres de sortie des machines électriques engrènent avec un engrenage droit commun de la transmission, lesdits arbres de sortie de rotor étant parallèles. Le couple moteur pénètre dans l'arbre d'entrainement commun via l'engrenage droit commun et ressort via une roue conique associée à un différentiel.

Dans ce système de propulsion, les arbres de sortie de rotor et l'arbre d'entrainement commun sont supportés par le carter de transmission par l'intermédiaire de paliers de guidage. Lorsque les machines électriques sont disposées symétriquement par rapport à l'engrenage droit commun, selon cet exemple avec un angle de 180 ° séparant les deux axes de machines de machine électrique, il n'y a pas de charge radiale appliquée sur les paliers de guidage qui supportent l'arbre d'entrainement commun. En l'absence de charge appliquée sur les paliers de guidage, le guidage de l'arbre d'entrainement peut osciller et faire varier la position de l'engrenage droit commun en prise avec les pignons affectés aux deux arbres de sortie de l'ordre de plusieurs microns. Une telle variation au niveau de l'engrènement de la denture du pignon par rapport à l'engrenage droit commun générera des bruits de fonctionnement au sein du système de propulsion. D'autres exemples de systèmes de propulsion sont présentés dans les documents WO2020/020440A1 et GB2591094A.

De manière générale, un tel système de propulsion purement électrique est bruyant du fait que les émissions de bruit en provenance du moteur thermique n'existent plus. La bruyance est générée par le contact entre les dentures d'engrenages au sein du carter de transmission mais aussi indirectement par le moteur électrique. Pour les transmissions de véhicule industriel à fort couple dans lesquels le système de propulsion comprend un ensemble de n machines électriques de propulsion, n étant un nombre entier supérieur ou égal à 2, le niveau de bruit est amplifié.

Il existe un besoin pour améliorer le confort acoustique des systèmes de propulsion pour véhicule électrique ou hybride comprenant plusieurs machines électriques et une succession de trains d'engrenage rapportés sur un carter de transmission.

### EXPOSÉ DE L'INVENTION

L'invention se propose notamment d'améliorer ce système de propulsion connu.

A cet effet, l'invention a pour objet un système de propulsion pour véhicule électrique ou hybride, comprenant dans un repère orthogonal XYZ :
- un ensemble de n machines électriques tournantes, n étant un nombre entier supérieur ou égal à 2, chaque machine électrique comprenant un rotor présentant un arbre de sortie mobile en rotation autour d'un axe de machine ;
- un arbre d'entrainement équipé d'au moins un engrenage d'axe de rotation de l'arbre d'entrainement apte à recevoir le couple moteur fourni par les n machines électriques et lié cinématiquement aux n arbres de sortie ;
- un carter de transmission supportant au moins une machine électrique et en partie l'arbre d'entrainement par l'intermédiaire d'au moins un palier de guidage concentrique à l'axe de rotation de l'arbre d'entrainement.
Le système de propulsion selon l'invention étant remarquable en ce que les axes de machine des n machines électriques sont répartis angulairement autour de l'axe de rotation de l'arbre d'entrainement et au moins une des machines électriques est décalée angulairement par rapport à une autre machine électrique d'un angle α tel que :
α = 360°/n - α1 avec un angle α1 compris entre 3° et 20°.

Ce système de propulsion présente l'avantage d'appliquer une charge radiale sur le palier de guidage suivant un effort modéré grâce à une répartition angulaire des machines électriques autour de l'axe de rotation de l'arbre d'entrainement qui comprend un angle α1 compris entre 3° et 20° entre deux machines électriques. La répartition n'est donc pas uniforme autour de l'axe de rotation de l'arbre d'entrainement. Cela permet de maintenir le palier de guidage dans une position fixe. Le maintien du palier de guidage selon une seule position radiale prédéfinie supprime les risques d'oscillation de cette position au sein du logement du carter de transmission. Ce risque d'oscillation existe tout particulièrement lorsque les n machines électriques sont disposées symétriquement autour de l'axe de rotation de l'arbre d'entrainement avec une répartition égale à 360° divisé par n. On réduit ainsi la bruyance au niveau des dentures d'engrenages de l'arbre intermédiaire avec les pignons par absence d'oscillation de la position du palier de guidage. De plus, la charge modérée appliquée sur le palier de guidage n'affecte pas sa durée de vie.

Dans le cas où les engrenages sont à denture hélicoïdale, l'angle α ne devra pas excéder 20° afin d'éviter le phénomène de couple de basculement autour de l'axe Y perpendiculaire à l'axe de rotation de l'arbre d'entrainement généré par l'effort axial résultant de l'angle d'inclinaison de la denture. L'effort axial généré par deux pignons d'arbres de sortie de rotor sur un engrenage commun de l'arbre d'entrainement aurait pour effet, au-delà de la valeur d'angle de 20°, de générer une flexion de cet engrenage de l'ordre de plusieurs microns au niveau de l'engrènement avec les pignons. Une telle variation au niveau de l'engrènement de la denture du pignon par rapport à l'engrenage générera des bruits de fonctionnement au sein du système de propulsion.

Ainsi, l'arbre d'entrainement tourne autour d'un axe de rotation de l'arbre d'entrainement et comprend au moins un engrenage apte à recevoir le couple moteur fourni par les n machines électriques et lié cinématiquement aux n arbres de sortie sans générer de bruit de fonctionnement au sein du système de propulsion.

Avantageusement, les axes de machine des n machines électriques et l'axe de rotation de l'arbre d'entrainement sont parallèles entre eux.

De préférence, l'arbre d'entrainement tournant autour de l'axe de rotation de l'arbre d'entrainement peut engrener directement avec les n arbres de sortie de rotor par l'intermédiaire de l'au moins un engrenage. Par exemple, l'engrènement direct de l'arbre d'entrainement peut se faire par l'intermédiaire d'une roue dentée commune en contact direct avec les n arbres de sortie de rotor ou par l'intermédiaire de plusieurs engrenages distincts en contact direct avec un arbre de sortie de rotor associé.

Selon l'invention, chaque arbre de sortie de rotor comprend un pignon denté, la position angulaire de l'engrènement du pignon denté d'une des machines électriques sur l'au moins un engrenage de l'arbre d'entrainement est décalé angulairement par rapport à la position angulaire de l'engrènement du pignon denté d'au moins une des autres machines électriques sur ce même engrenage ou sur un autre engrenage de l'arbre d'entrainement.

Selon l'invention, le décalage angulaire de l'engrènement des pignons dentés sur l'arbre d'entrainement correspond à 1/n dent du pignon denté. De cette manière, on harmonise la transmission du couple au sein du train d'engrenage.

Chaque machine électrique peut être configurée pour fonctionner de manière réversible, étant alors associée à une électronique tel qu'un onduleur/redresseur lui permettant alternativement : d'être alimentée en énergie électrique pour fournir un couple moteur, et de générer de l'énergie électrique sur la base d'un couple reçu sur son arbre de sortie lorsque le véhicule freine ou qu'il roule sur sa lancée, par exemple.

Chaque machine électrique est par exemple une machine électrique tournante. La machine électrique peut notamment être synchrone ou asynchrone, a aimants permanents ou non, une machine électrique à réluctance variable. Alternativement, les n machines électriques peuvent être de conception différente.

En variante, les n machines électriques peuvent être de préférence une machine à haute tension, alimentée par exemple à une tension nominale comprise entre 300 Volts et 800 Volts. Des tensions d'alimentation plus élevées peuvent être envisagées telle que 1000 volts. En variante, les n machines électriques peuvent être alimentée en 48 volts.

Les n machines électriques peuvent fournir une même puissance nominale mécanique, cette puissance étant par exemple comprise entre 50kW et 300kW. L'emploi de machines électriques identiques peut permettre de réduire les coûts de production du système de propulsion, en réduisant le besoin en développements spécifiques d'une machine à l'autre et en augmentant les volumes.

Avantageusement, chaque machine électrique peut comprendre un stator d'axe de machine et ledit rotor peut être équipé de paires de pôles magnétiques, les n machines électriques comprenant le même nombre P de paires de pôles magnétiques, et les axes de machine des n machines électriques sont répartis angulairement autour de l'axe de rotation de l'arbre d'entrainement et l'orientation angulaire du stator d'une des machines électriques peut être décalée selon son propre axe de machine par rapport à l'orientation angulaire du stator d'une autre machine électrique d'une valeur d'angle β telle que : β = 360° / [ P x n ]. Par exemple, le rotor peut comprendre un nombre P de paires de pôles compris entre 2 et 12, par exemple entre 4 et 8. De cette manière, l'amplitude des ordres d'excitation des machines électriques est réduite par rapport à un cas défavorable où l'on cumulerait les amplitudes. On limite ainsi la flexion des engrenages et pignons constituant les différents trains d'engrenage et on évite l'endommagement du palier de guidage.

De manière complémentaire, le carter de transmission peut supporter les n machines électriques et chaque machine électrique peut comprendre des moyens de positionnement angulaire permettant de positionner individuellement chaque machine électrique par rapport au carter de transmission. Il est ainsi facile d'assembler chaque machine électrique sur le carter de transmission.

De préférence, chaque machine électrique peut comprendre un stator, une enveloppe de protection supportant le stator et ledit rotor, dans lequel l'orientation angulaire du stator d'une des machines électriques est décalée angulairement selon son propre axe de machine par rapport à l'orientation angulaire du stator d'une autre machine électrique.

Avantageusement, les enveloppes de protection des machines électriques peuvent être identiques et rapportés sur la carter de transmission, les surfaces d'appui des enveloppes de protection sur le carter de transmission étant réparties de manière asymétrique par rapport à l'axe de rotation de l'arbre d'entrainement.

De préférence, les enveloppes de protection peuvent être rapportées sur le carter de transmission et orientées angulairement selon leur axe de machine avec un décalage angulaire les unes par rapport aux autres.

Avantageusement, le pignon denté de l'arbre de sortie d'une des machines électriques peut présenter un premier diamètre primitif d'engrènement et le pignon denté de l'arbre de sortie d'une autre machine électrique peut présenter un deuxième diamètre primitif différent du premier diamètre primitif.

De préférence, le rotor d'une des machines électriques peut être disposé axialement sur un côté de l'au moins un engrenage de l'arbre d'entrainement et un rotor d'une autre machine électrique peut être disposé de l'autre côté de l'au moins un engrenage.

Avantageusement, le palier de guidage peut être disposé axialement selon l'axe de rotation de l'arbre d'entrainement entre au moins deux machines électriques.

Avantageusement, le carter de transmission peut comporter une paroi externe, au moins une surface plane d'appui aménagée sur la paroi externe, ladite surface d'appui définissant un plan perpendiculaire à l'axe du palier de guidage pour supporter les n machines électriques, et n ouvertures débouchant dans la ou les surfaces planes d'appui, les n ouvertures étant traversées chacune par un arbre de sortie de rotor de machine électrique.

Selon un mode de mise œuvre de l'invention préféré, l'arbre d'entrainement peut comprendre une roue dentée commune liée cinématiquement avec l'arbre de sortie de chaque rotor, les n machines électriques étant réparties angulairement autour de la roue dentée commune de sorte à former un réducteur de vitesse entre chaque arbre de sortie de rotor et la roue dentée commune.

Dans ce cas de figure, l'arbre d'entrainement engrène directement avec les n arbres de sortie de rotor par l'intermédiaire de la roue dentée commune.

Selon un autre mode de mise œuvre de l'invention préféré, l'arbre d'entrainement peut comprendre deux engrenages distincts, les arbres de sortie de chaque rotor étant répartis sur les deux engrenages de sorte à former deux réducteurs de vitesse distincts entre chaque arbre de sortie de rotor et l'engrenage associé.

Dans ce cas de figure, l'arbre d'entrainement engrène directement avec les n arbres de sortie de rotor par l'intermédiaire des deux engrenages distincts.

Selon un autre de ses aspects, l'invention peut comprendre un système de propulsion pour véhicule électrique, comprenant :
- un premier sous-ensemble de n1 machines électriques tournantes apte à fournir un premier couple moteur, n1 étant un nombre entier supérieur ou égal à 2, chaque machine électrique comprenant un stator et un rotor présentant un arbre de sortie mobile en rotation autour d'un axe lié cinématiquement à une première roue dentée commune de sorte à former un premier réducteur de vitesse,
- un deuxième sous-ensemble de n2 machines électriques tournantes apte à fournir un deuxième couple moteur, n2 étant un nombre entier supérieur ou égal à 2, chaque machine électrique comprenant un stator et un rotor présentant un arbre de sortie mobile en rotation autour d'un axe lié cinématiquement à une deuxième roue dentée commune de sorte à former un deuxième réducteur de vitesse,
- un premier ensemble de trains d'engrenage liant cinématiquement la première roue dentée commune à un arbre secondaire apte à entraîner un ensemble d'une ou plusieurs roues motrices du véhicule, dans lequel un premier système de couplage sélectif, disposé entre la première roue dentée commune et l'arbre secondaire, est agencé pour sélectionner un premier train d'engrenage ou un deuxième train d'engrenage depuis une position neutre lors d'une phase de changement de rapport de vitesse,
- un deuxième ensemble de trains d'engrenage liant cinématiquement la deuxième roue dentée commune à l'arbre secondaire,
dans lequel le deuxième sous-ensemble de n2 machines électriques peut être commandé de manière à fournir un couple supplémentaire permettant de compenser totalement la perte de couple issue du découplage du premier sous-ensemble de n1 machines électriques inhérente au changement de rapport de vitesse.

Le premier ensemble de trains d'engrenage selon l'invention étant remarquable en ce que les axes de machine des n1 machines électriques sont répartis angulairement autour de l'axe de rotation de la première roue dentée commune et au moins une des machines électriques est décalée angulairement par rapport à une autre machine électrique d'un angle α tel que : $α = 360 ° / n 1 - α 1 avec un angle α 1 compris entre 3 ° et 20 ° .$

Le deuxième ensemble de trains d'engrenage selon l'invention étant remarquable en ce que les axes de machine des n2 machines électriques sont répartis angulairement autour de l'axe de rotation de la deuxième roue dentée commune et au moins une des machines électriques est décalée angulairement par rapport à une autre machine électrique d'un angle α tel que : $α = 360 ° / n 2 - α 1 avec un angle α 1 compris entre 3 ° et 20 ° .$

Par la fourniture d'un système de propulsion qui comprend deux sous-ensemble de machines électriques distincts, il est possible de faire démarrer le véhicule électrique en alimentant électriquement les deux sous-ensembles de machines électriques en continu. Un couple maximal peut être transmis aux roues du véhicule. Lors d'une phase de changement de rapport de vitesse, l'avantage apporté par l'invention est que l'un des sous-ensembles de machines électriques peut être commandé de manière à fournir un couple ou une puissance supplémentaire lors de cette phase tandis que l'autre sous-ensemble de machines électriques ne transmet plus de couple ou de puissance afin d'effectuer ce changement de rapport. Comme la perte de couple ou de puissance inhérente au changement de vitesse est compensée totalement, le véhicule électrique conserve sa vitesse lors de cette phase transitoire.

Avantageusement, le couple supplémentaire peut être approximativement égal au premier couple moteur qui est fournie par le premier sous-ensemble de n1 machines électriques juste avant la phase de changement de rapport de vitesse.

Chaque machine électrique dispose ce qu'on appelle d'une « puissance nominale », qui est la puissance qu'elle est capable de fournir sur une longue période de temps et une « puissance maximale » (alias « puissance de crête »), qui est la puissance que l'on ne peut dépasser. De manière avantageuse, la puissance maximale n'est utilisée que sur une très courte durée, de l'ordre de quelques secondes, afin d'éviter une surchauffe excessive et d'endommager les composants de la machine électrique. Selon l'invention, la puissance nominale est dépassée lors des changements de rapport de vitesse pour compenser la perte de puissance inhérente à ce changement. Autrement dit, en condition normale de roulage du véhicule, les puissances respectives délivrées par les n1 machines électriques et les n2 machines électriques restent inférieures ou égales à la puissance nominale correspondante.

### BRÈVE DESCRIPTION DES FIGURES

D'autres caractéristiques et avantages de l'invention ressortiront à la lecture de la description qui suit, en référence aux figures annexées.
[Fig. 1] La figure 1a est vue isométrique d'un système de propulsion pour véhicule électrique ou hybride selon un premier exemple de mise en œuvre de l'invention,
[Fig. 2] La figure 2 est vue de face du système de propulsion selon le premier exemple de mise en œuvre de l'invention de la figure 1,
[Fig. 3] La figure 3 est une vue isométrique d'un système de propulsion pour véhicule électrique ou hybride selon un deuxième exemple de mise en œuvre de l'invention,
[Fig. 4] La figure 4 est une vue isométrique d'un système de propulsion pour véhicule électrique ou hybride selon un troisième exemple de mise en œuvre de l'invention,
[Fig. 5a] La figure 5a une vue de détail d'un système de propulsion pour véhicule électrique ou hybride selon un quatrième exemple de mise en œuvre de l'invention,
[Fig. 5b] La figure 5b une autre vue de détail d'un système de propulsion pour véhicule électrique ou hybride selon ce quatrième exemple de mise en œuvre de l'invention de la figure 5a,
[Fig. 6] La figure 6 est une vue de face d'un système de propulsion pour véhicule électrique ou hybride selon un cinquième exemple de mise en œuvre de l'invention,
Pour plus de clarté, les éléments identiques ou similaires sont repérés par des signes de référence identiques sur l'ensemble des figures.

### DESCRIPTION DÉTAILLÉE DE MODES DE RÉALISATION

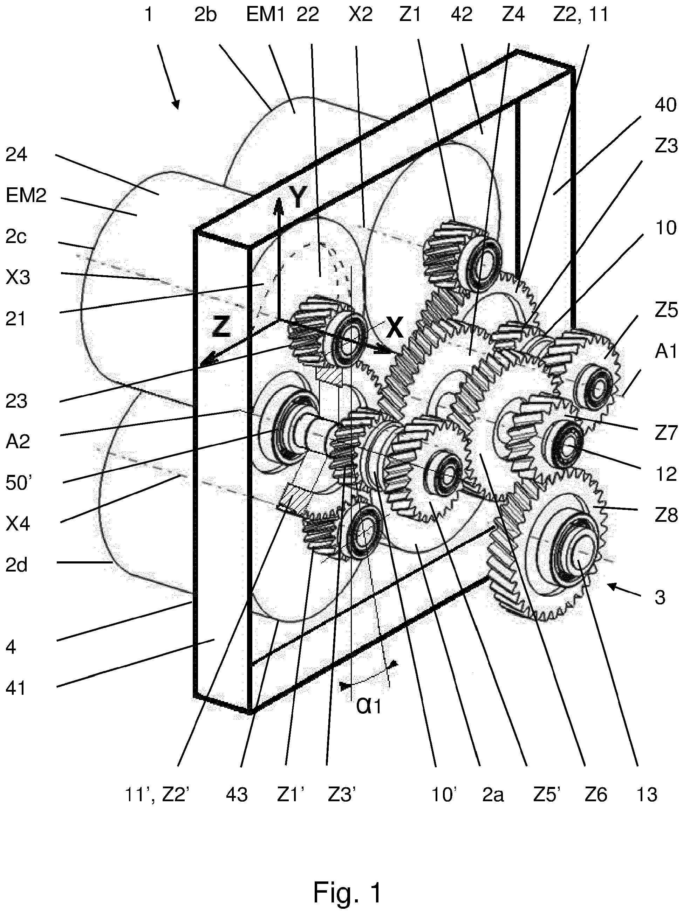

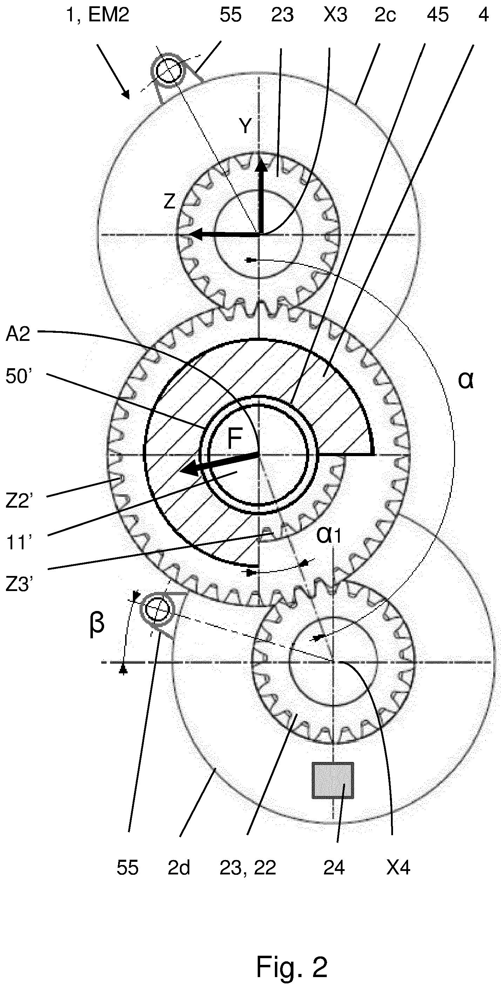

On a représenté sur les figures 1 et 2 un système de propulsion 1 de véhicule électrique selon un premier exemple de mise en œuvre de l'invention comprenant dans un repère orthogonal XYZ, quatre machines électriques 2a, 2b, 2c et 2d de propulsion réversibles liées cinématiquement à des arbres d'entrainement 11, 11' distincts. Ce système de propulsion 1 est ici purement électrique, c'est-à-dire qu'il n'utilise aucun moteur thermique pour entraîner le véhicule qui est ici un véhicule industriel, par exemple un poids lourd.

Dans le repère orthogonal XYZ, les plans XY, YZ et XZ sont perpendiculaires entre eux.

Les machines électriques 2a, 2b, 2c, 2d tournantes sont du même type et sont par exemple des machines synchrones à aimants permanents. Chaque machine électrique fournit une même puissance nominale mécanique, cette puissance étant par exemple de l'ordre 100kW.

Dans ce système de propulsion 1, chaque machine électrique 2a, 2b, 2c et 2d comprend un stator 21 agencé radialement à l'extérieur du rotor 22 et une enveloppe de protection 24 entourant le stator. Les machines électriques sont rapportées sur un carter de transmission 4 qui comporte une paroi externe 41 et une surface plane d'appui 42 définissant un plan YZ perpendiculaire à l'axe X du repère orthogonal XYZ aménagée sur la paroi externe 41 pour supporter les quatre machines électriques. Le carter de transmission 4 définit un espace interne 40 à l'intérieur duquel est disposé un train d'engrenage 3. Les axes de rotation des machines électriques tournantes sont parallèles mais non confondus, les quatre machines électriques n'ayant pas leurs axes de rotation alignés.

Les enveloppes de protection 24 des machines électriques comprennent une embase de fixation pour la fixation sur la surface plane d'appui 42 du carter de transmission 4. Des ouvertures 43 débouchant dans la surface plane d'appui 42 selon un axe parallèle à l'axe X, permettent le passage des rotors 22 au sein de l'espace interne 40. Les ouvertures sont traversées chacune par l'arbre de sortie 23 des rotors 22 de machine électrique.

Comme illustré sur la figure 1, le système de propulsion 1 comprend un premier sous-ensemble EM1 de deux machines électriques 2a, 2b de propulsion apte à fournir un premier couple moteur. La première machine électrique 2a présente un premier axe de rotation de machine X1 et la deuxième machine électrique 2b présente un deuxième axe de rotation de machine X2.

Chaque machine électrique 2a, 2b du premier sous-ensemble EM1 comprend un stator 21 et un rotor 22 présentant un arbre de sortie 23 mobile en rotation autour d'un axe de machine X1, X2 lié cinématiquement à un premier arbre d'entrainement 11. Dans ce sous-ensemble EM1, chaque arbre de sortie 23 de rotor comprend un pignon denté Z1 accouplé à un engrenage Z2 du premier arbre d'entrainement 11 réalisé sous la forme d'une première roue dentée commune de sorte à former un premier réducteur de vitesse Z1, Z2 entre chaque arbre de sortie de rotor et la première roue dentée commune. Les arbres de sortie 23 des deux machines électriques 2a, 2b engrènent simultanément sur la première roue dentée commune Z2 disposée entre les axes de machine X1 et X2.

Ce système de propulsion 1 comprend un deuxième sous-ensemble EM2 de deux machines électriques 2c, 2d de propulsion apte à fournir un deuxième couple moteur. La troisième machine électrique 2c présente un troisième axe de rotation de machine X3 et la quatrième machine électrique 2d présente un quatrième axe de rotation de machine X4.

Chaque machine électrique 2c, 2d du deuxième sous-ensemble EM2 comprend un stator 21 et un rotor 22 présentant un arbre de sortie 23 mobile en rotation autour d'un axe de machine X3, X4 lié cinématiquement à un deuxième arbre d'entrainement 11'. Dans ce sous-ensemble EM2, chaque arbre de sortie 23 de rotor comprend un pignon denté Z1' accouplé à un engrenage Z2' du deuxième arbre d'entrainement 11' réalisé sous la forme d'une deuxième roue dentée commune de sorte à former un deuxième réducteur de vitesse Z1', Z2' entre chaque arbre de sortie de rotor et la deuxième roue dentée commune. Les arbres de sortie 23 des deux machines électriques 2c, 2d engrènent simultanément sur la deuxième roue dentée commune Z2' disposée entre les axes de machine X3 et X4.

Le carter de transmission 4 supporte les quatre machines électriques et les roues dentées communes Z2 et Z2' à l'aide de paliers de guidage 50, 50'. Le carter de transmission supporte des contraintes mécaniques réparties plus uniformément du fait de la répartition géométrique des machines électriques autour des roues dentées communes. Le carter de transmission est généralement constitué de plusieurs carters assemblés entre eux afin de former un enceinte close protégeant le train d'engrenage 3.

Chaque palier de guidage 50, 50' associé à deux machines électriques est inséré dans un logement cylindrique 45 aménagé sur une paroi du carter de transmission. Le palier de guidage 50' supportant le deuxième arbre d'entrainement 11' associé aux machines électriques 2c, 2d est décalé axialement par rapport aux pignons dentés Z1'. Le palier de guidage 50' est ici un roulement à billes dont la bague extérieure non tournante est insérée dans le logement cylindrique 45 du carter de transmission.

Le carter de transmission 4 comprend également un circuit de circulation de fluide cheminant entre les quatre machines électriques afin d'évacuer les calories émises lors de la transmission d'un couple au sein du système de propulsion. Le fluide peut être de l'huile de refroidissement ou une solution aqueuse.

Le système de propulsion 1 comprend un premier ensemble de trains d'engrenage liant cinématiquement la première roue dentée commune Z2 à un arbre secondaire 13. Plus précisément, le premier ensemble de trains d'engrenage comprend:
- des roues dentées primaires Z3, Z5 aptes à être entraînées par la première roue dentée commune Z2,
- un arbre intermédiaire 12 apte à être entrainé par des roues dentées intermédiaires Z4, Z6, chaque roue dentée primaire Z3, Z5 étant liée cinématiquement à une roue dentée intermédiaire Z4, Z6 correspondante de sorte à former un train d'engrenage correspondant à un troisième réducteur de vitesse,
- une roue dentée secondaire Z8 solidaire en rotation de l'arbre secondaire 13 et liée cinématiquement à l'arbre intermédiaire 12 de sorte à former un quatrième réducteur de vitesse.

Le premier ensemble de trains d'engrenage comprend également un premier système de couplage sélectif 10, disposé entre la première roue dentée commune Z2 et l'arbre secondaire 13, agencé pour sélectionner un premier train d'engrenage Z3, Z4 ou un deuxième train d'engrenage Z5, Z6 depuis une position neutre de découplage. Le premier système de couplage sélectif 10 est disposé entre la première roue dentée commune Z2 et les roues dentées primaires Z3, Z5. Ce premier système de couplage sélectif 10 à trois positions est réalisé sous la forme d'un crabot.

Dans ce premier exemple de mise en œuvre de l'invention, le deuxième ensemble de trains d'engrenage comprend un deuxième système de couplage sélectif 10', disposé entre la deuxième roue dentée commune Z2' et l'arbre secondaire 13, agencé pour sélectionner un troisième train d'engrenage Z3', Z4 ou un quatrième train d'engrenage Z5', Z6 depuis une position neutre lors d'une phase de changement de rapport de vitesse.

En raison de l'architecture sensiblement symétrique du système de propulsion 1, le rapport de réduction du premier train d'engrenage Z3, Z4 est identique à celui du troisième train d'engrenage Z3', Z4 et le rapport de réduction du deuxième train d'engrenage Z5, Z6 est identique à celui du quatrième train d'engrenage Z5', Z6.

Le deuxième ensemble de trains d'engrenage comprend :
- deux roues dentées primaires Z3', Z5' aptes à être entraînées par la deuxième roue dentée commune Z2',
- l'arbre intermédiaire 12 commun avec le premier ensemble de trains d'engrenage, chaque roue dentée primaire Z3', Z5' du deuxième ensemble de trains d'engrenage étant liée cinématiquement à une roue dentée intermédiaire Z4, Z6 correspondante de sorte à former un train d'engrenage auquel est associé un cinquième réducteur de vitesse.

Le deuxième système de couplage sélectif 10' est disposé entre la deuxième roue dentée commune Z2' et les roues dentées primaires Z3', Z5'. Ce deuxième système de couplage sélectif 10' à trois positions est réalisé sous la forme d'un crabot.

Ce premier exemple de mise en œuvre de l'invention présente l'avantage d'avoir deux rapports de réduction distincts sans perte de couple ou de puissance lors des phases de changement de rapport de vitesse. Par exemple, il est possible de faire démarrer le véhicule électrique en alimentant électriquement les deux sous-ensembles de machines électriques en continu. Lors d'une phase transitoire de changement de rapport de vitesse, le véhicule électrique conserve sa vitesse car l'un des sous-ensembles de machines électriques peut être commandé de manière à fournir un couple ou une puissance supplémentaire lors de cette phase tandis que l'autre sous-ensemble de machines électriques ne transmet plus de couple ou de puissance afin d'effectuer ce changement de rapport.

On a représenté sur la figure 2, une vue de face partielle du système de propulsion de la figure 1 avec une partie seulement du deuxième sous-ensemble EM2. On y retrouve notamment les deux machines électriques 2c, 2d de propulsion, l'arbre d'entrainement 11' équipé des engrenages Z2' et Z3' d'axe de rotation A2 apte à recevoir le couple moteur fourni par les deux machines électriques, ainsi que le carter de transmission 4 supportant les machines électriques et en partie l'arbre d'entrainement 11' par l'intermédiaire du palier de guidage 50' concentrique à l'axe de rotation A2.

Dans ce système de propulsion 1 selon l'invention, les axes X3, X4 des deux machines électriques 2c, 2d sont répartis angulairement autour de l'axe de rotation A2 de l'arbre d'entrainement et une des machines électriques 2d est décalée angulairement par rapport à l'autre machine électrique 2c d'un angle α tel que
α = 360°12 - α1 avec un angle α1 compris entre 3° et 20°, dans cet exemple l'angle α1 est égal à 15°.

Ainsi, les machines électriques sont orientées l'une par rapport à l'autre avec un angle α =165° autour de l'axe A2 afin d'appliquer une charge radiale sur le palier de guidage 50' suivant un effort F modéré. Le palier de guidage 50' est ainsi plaqué contre le logement cylindrique 45 aménagé sur une paroi du carter de transmission 4 suivant une direction fixe matérialisée par la flèche F de la figure 2.

De la même manière, le premier sous-ensemble de trains d'engrenage EM1 est agencé de la sorte que les axes de machine des machines électriques 2a, 2b soient répartis angulairement autour de l'axe de rotation de la première roue dentée commune et la machine électrique 2a est décalée angulairement par rapport à l'autre machine électrique 2b d'un angle α tel que : $α = 360 ° / 2 - α 1 avec un angle α 1 compris entre 3 ° et 20 ° .$

Afin de limiter la bruyance au sein du deuxième sous-ensemble EM2 du système de propulsion, chaque machine électrique 2 comprend un rotor 22 équipé de quatre paires de pôles magnétiques 24, les deux machines électriques comprenant le même nombre P de paires de pôles magnétiques 24. Dans ce sous-ensemble EM2, les axes de machine X3, X4 des deux machines électriques 2 sont répartis angulairement autour de l'axe de rotation A2 du deuxième arbre d'entrainement 11' et l'orientation angulaire du stator 21 d'une des machines électriques 2 est décalée selon son propre axe de machine X3, X4 par rapport à l'orientation angulaire du stator d'une autre machine électrique d'une valeur d'angle β telle que : β = 360° / [ 4 x 2 ] = 45°. De cette manière, l'amplitude des ordres d'excitation des machines électriques est réduite par rapport à un cas défavorable où l'on cumulerait les amplitudes.

Comme illustré sur la figure 2, le carter de transmission 4 supporte les deux machines électriques 2 et chaque machine électrique 2 comprend des moyens de positionnement angulaire 55 permettant de positionner individuellement chaque machine électrique par rapport au carter de transmission 4.

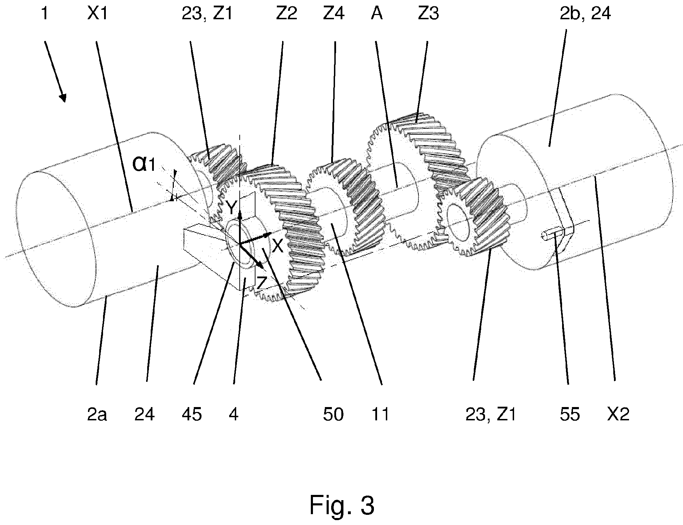

On va maintenant décrire en référence à la figure 3, un système de propulsion 1 selon un deuxième mode de mise en œuvre de l'invention comprenant seulement deux machines électriques. Ce deuxième mode de mise en œuvre de l'invention se distingue par le fait que les machines électriques engrènent sur un même arbre d'entrainement 11 par l'intermédiaire de deux engrenages Z2, Z3 distincts. Les machines électriques tournantes 2a, 2b sont du même type et sont par exemple des machines asynchrones.

Dans ce système de propulsion 1, chaque machine électrique 2a, 2b comprend un stator 21 agencé radialement à l'extérieur du rotor 22 et une enveloppe de protection 24 entourant le stator. La première machine électrique 2a présente un premier axe de rotation de machine X1 et la deuxième machine électrique 2b présente un deuxième axe de rotation de machine X2. Les axes de rotation des machines électriques tournantes sont parallèles mais non confondus, les deux machines électriques n'ayant pas leurs axes de rotation alignés.

Comme illustré sur la figure 3, l'enveloppe de protection 24 de la machine électrique 2a est intégrée au carter de transmission 4. L'autre enveloppe de protection 24 de la machine électrique 2b est rapportée sur le carter de transmission 4. Le carter de transmission 4 supporte les machines électriques 2a, 2b et l'arbre d'entrainement 11 à l'aide d'un palier de guidage 50 inséré dans un logement cylindrique 45 aménagé sur une paroi du carter de transmission 4. Le palier de guidage 50 est ici un roulement à billes dont la bague extérieure non tournante est insérée dans le logement cylindrique 45 du carter de transmission. La machine électrique 2b comprend des moyens de positionnement angulaire 55 permettant de positionner individuellement celle-ci par rapport au carter de transmission 4.

Dans ce deuxième mode de réalisation, le rotor 22 de la machine électrique 2a présente un arbre de sortie 23 mobile en rotation autour d'un axe de machine X1 lié cinématiquement à l'arbre d'entrainement 11. Cet arbre d'entrainement 11 d'axe de rotation A comprend deux engrenages distincts Z2, Z3 d'entrée de couple et un engrenage Z4 de sortie de couple. Les arbres de sortie 23 de chaque rotor sont répartis sur les deux engrenages Z2, Z3 de sorte à former deux réducteurs de vitesse Z1, Z2 et Z1, Z3 distincts entre chaque arbre de sortie de rotor et l'engrenage associé.

Dans ce système de propulsion 1 selon l'invention, les axes X1, X2 des deux machines électriques 2a, 2b sont répartis angulairement autour de l'axe de rotation A de l'arbre d'entrainement 11 et une des machines électriques 2a est décalée angulairement par rapport à l'autre machine électrique 2b d'un angle α tel que α = 360°/2 - α1 avec un angle α1 compris entre 3° et 20°, dans cet exemple l'angle α1 est égal à 10°. Ainsi, les machines électriques 2a, 2b sont orientées l'une par rapport à l'autre avec un angle α =170° autour de l'axe A.

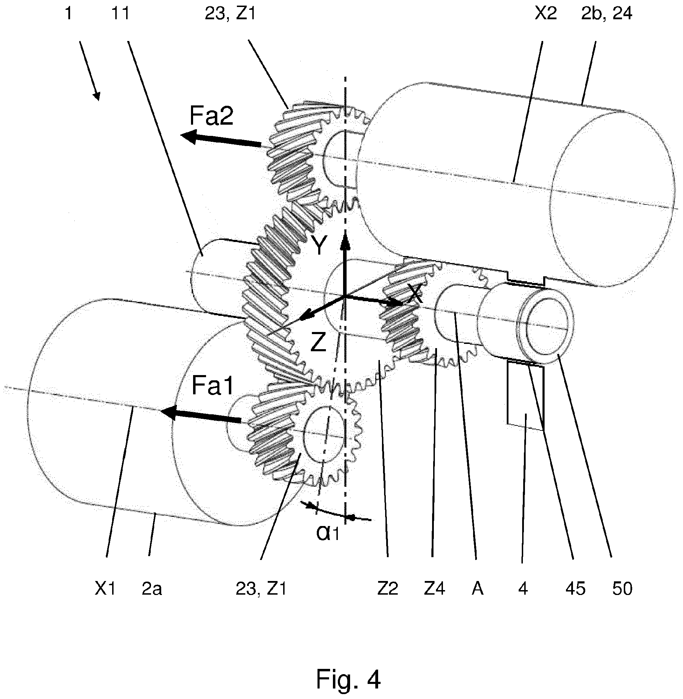

On va maintenant décrire en référence à la figure 4, un système de propulsion 1 selon un troisième mode de mise en œuvre de l'invention qui se distingue du premier mode par le fait que le système de propulsion comprend seulement deux machines électriques et que le rotor d'une des machines électriques est disposé axialement sur un côté de l'engrenage de l'arbre d'entrainement et le rotor de l'autre machine électrique est disposé de l'autre côté de l'engrenage.

Dans ce système de propulsion 1, chaque machine électrique 2a, 2b comprend un stator 21 agencé radialement à l'extérieur du rotor 22 et une enveloppe de protection 24 entourant le stator. La première machine électrique 2a présente un premier axe de rotation de machine X1 et la deuxième machine électrique 2b présente un deuxième axe de rotation de machine X2. Les axes de rotation des machines électriques tournantes sont parallèles mais non confondus, les deux machines électriques n'ayant pas leurs axes de rotation alignés.

Comme illustré sur la figure 4, l'enveloppe de protection 24 de la machine électrique 2a est intégrée au carter de transmission 4. Le carter de transmission 4 supporte la machine électrique 2a et l'arbre d'entrainement 11 à l'aide d'un palier de guidage 50 inséré dans un logement cylindrique 45 aménagé sur une paroi du carter de transmission 4. Le palier de guidage 50 est ici un roulement à billes dont la bague extérieure non tournante est insérée dans le logement cylindrique 45 du carter de transmission.

Chaque machine électrique 2a, 2b du système de propulsion 1 comprend un rotor 22 présentant un arbre de sortie 23 mobile en rotation autour d'un axe de machine X1, X2 lié cinématiquement à un arbre d'entrainement 11. Chaque arbre de sortie 23 de rotor comprend un pignon denté Z1 accouplé à un engrenage Z2 de l'arbre d'entrainement 11 réalisé sous la forme d'une roue dentée commune de sorte à former un réducteur de vitesse Z1, Z2 entre chaque arbre de sortie de rotor et la roue dentée commune. Les arbres de sortie 23 des deux machines électriques 2a, 2b engrènent simultanément sur la roue dentée commune Z2 disposée entre les axes X1 et X2. L'arbre d'entrainement 11 d'axe de rotation A comprend également un engrenage Z4 de sortie de couple.

Dans ce système de propulsion 1 selon l'invention, les axes X1, X2 des deux machines électriques 2a, 2b sont répartis angulairement autour de l'axe de rotation A de l'arbre d'entrainement 11 et une des machines électriques 2a est décalée angulairement par rapport à l'autre machine électrique 2b d'un angle α tel que α = 360°/2 - α1 avec un angle α1 compris entre 3° et 20°, dans cet exemple l'angle α1 est égal à 8°.

Ainsi, les machines électriques sont orientées l'une par rapport à l'autre avec un angle α =172° autour de l'axe A afin d'appliquer une charge radiale sur le palier de guidage suivant un effort modéré. Le palier de guidage est ainsi plaqué contre le logement cylindrique 45 aménagé sur une paroi du carter de transmission 4. Etant donné que les efforts axiaux Fa1 et Fa2 générés par les deux pignons denté Z1 sont répartis de part et d'autres de l'axe A, le couple de basculement autour de l'axe Y est faible et peut être facilement supporté par les paliers de guidage 50 et par la rigidité de l'engrenage Z2. La flexion de cet engrenage Z2 est ainsi négligeable et n'aura pas de conséquence sur la bruyance du système de propulsion.

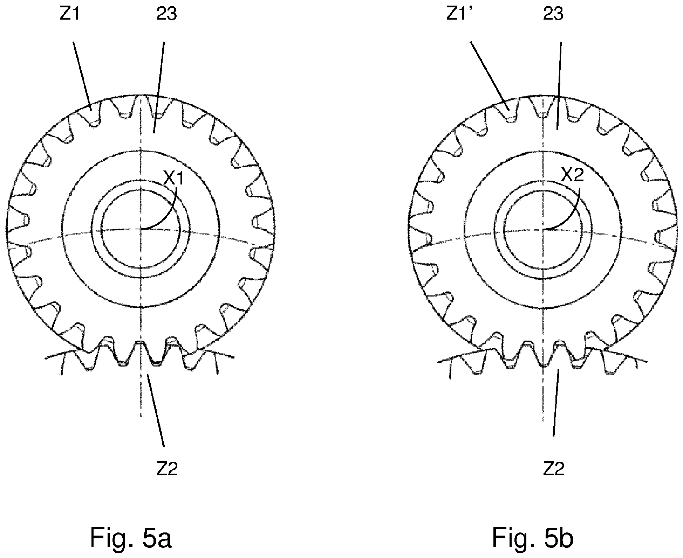

On va maintenant décrire en référence aux figures 5a et 5b, un système de propulsion 1 selon un quatrième mode de mise en œuvre de l'invention qui se distingue du premier mode par le fait que le système de propulsion comprend deux machines électriques et que chaque arbre de sortie de rotor comprend un pignon denté, la position angulaire de l'engrènement du pignon denté d'une des machines électriques sur un engrenage de l'arbre d'entrainement est décalé angulairement par rapport à la position angulaire de l'engrènement du pignon denté d'au moins une des autres machines électriques, le décalage angulaire de l'engrènement des pignons dentés sur l'arbre d'entrainement correspondant à 1/2 dent du pignon denté.

Dans le cas où le système de propulsion 1 comprend deux machines électriques identiques comme illustré sur les figures 5a et 5b, le décalage angulaire de l'engrènement des pignons dentés Z1 et Z1' sur l'arbre d'entrainement 11 comprenant une roue dentée commune Z2 correspond à 1/2 dent du pignon denté Z1. Ainsi, l'arbre de sortie 23 du rotor de la machine électrique 2a est engagé sur la roue dentée commune Z2 avec un décalage angulaire d'une demi-dent par rapport à l'arbre de sortie 23 du rotor de la machine électrique 2b. De cette manière, on harmonise la transmission du couple au sein du train d'engrenage.

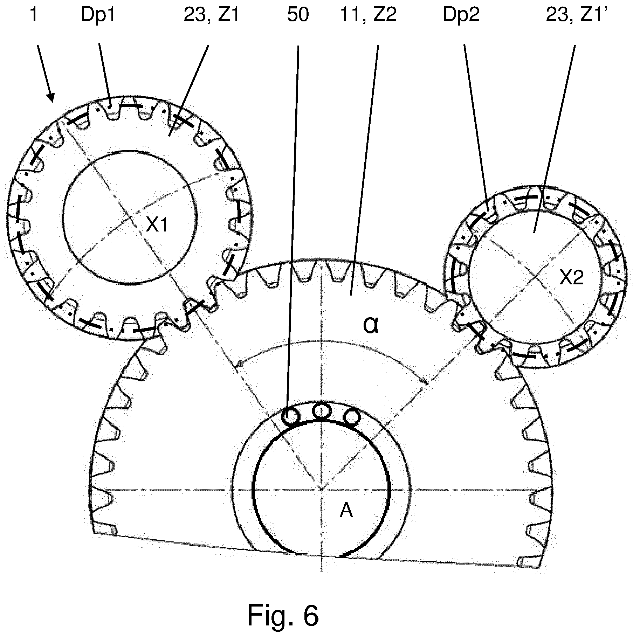

On va maintenant décrire en référence à la figure 6, un système de propulsion 1 selon un cinquième mode de mise en œuvre de l'invention qui se distingue du premier mode par le fait que le système de propulsion comprend quatre machines électriques et que le pignon denté de l'arbre de sortie d'une des machines électriques présente un premier diamètre primitif Dp1 d'engrènement et le pignon denté de l'arbre de sortie d'une autre machine électrique présente un deuxième diamètre primitif Dp2 différent du premier diamètre primitif Dp1.

La différence de diamètre primitif sur les pignon denté Z1, Z1' des arbres de sortie 23 génère un décalage angulaire de l'engrènement des pignons dentés Z1 et Z1' sur l'arbre d'entrainement 11 comprenant une roue dentée commune Z2. Pour que le système de propulsion puisse fonctionner, les engrenages ont le même module. Ainsi, l'arbre de sortie 23 du rotor de la machine électrique 2a est engagé sur la roue dentée commune Z2 avec un décalage angulaire par rapport à l'arbre de sortie 23 du rotor de la machine électrique 2b. De cette manière, on harmonise la transmission du couple au sein du train d'engrenage.

Dans ce système de propulsion 1 selon l'invention, les axes X1, X2 des deux machines électriques 2a, 2b sont répartis angulairement autour de l'axe de rotation A de l'arbre d'entrainement 11 et une des machines électriques 2a est décalée angulairement par rapport à l'autre machine électrique 2b d'un angle α tel que α = 360°/4 - α1 avec l'angle α1 compris entre 3° et 20°, dans cet exemple l'angle α1 est égal à 10°. Ainsi, les machines électriques 2a, 2b sont orientées l'une par rapport à l'autre avec un angle α = 80° autour de l'axe A afin d'appliquer une charge radiale sur le palier de guidage 50 suivant un effort modéré. Le palier de guidage 50 est ainsi plaqué contre une paroi du carter de transmission 4.

L'invention n'est pas limitée aux exemples qui viennent d'être décrits. Dans un autre exemple de mise en œuvre de l'invention, le système de propulsion 1 peut être équipé de plusieurs machines électriques réversibles accouplés à une transmission du véhicule hybride qui comprend également un moteur thermique, une boite de vitesses et un mécanisme d'embrayage à friction disposé entre le moteur et la boite de vitesses.

## Revendications

1. Système de propulsion (1) pour véhicule électrique ou hybride, comprenant dans un repère orthogonal (XYZ) :
- un ensemble de n machines électriques (2) tournantes, n étant un nombre entier supérieur ou égal à 2, chaque machine électrique comprenant un rotor (22) présentant un arbre de sortie (23) mobile en rotation autour d'un axe de machine (Xn) ;
- un arbre d'entrainement (11, 11') équipé d'au moins un engrenage (Z2, Z2', Z3) tournant autour d'un axe de rotation (A, A1, A2) de l'arbre d'entrainement apte à recevoir le couple moteur fourni par les n machines électriques (2) et lié cinématiquement aux n arbres de sortie (23) ;
- un carter de transmission (4) supportant au moins une machine électrique et en partie l'arbre d'entrainement par l'intermédiaire d'au moins un palier de guidage (50, 50') concentrique à l'axe de rotation (A, A1, A2) de l'arbre d'entrainement ;
dans lequel les axes de machine (Xn) des n machines électriques (2) sont répartis angulairement autour de l'axe de rotation (A, A1, A2) de l'arbre d'entrainement et au moins une des machines électriques est décalée angulairement par rapport à une autre machine électrique d'un angle α tel que : α = 360°/n - α1 avec un angle α1 compris entre 3° et 20°, dans lequel chaque arbre de sortie (23) de rotor comprend un pignon denté (Z1, Z1'), la position angulaire de l'engrènement du pignon denté (Z1, Z1') d'une des machines électriques (2) sur l'au moins un engrenage de l'arbre d'entrainement est décalé angulairement par rapport à la position angulaire de l'engrènement du pignon denté d'au moins une des autres machines électriques sur ce même engrenage ou sur un autre engrenage de l'arbre d'entrainement (11, 11'),
**caractérisé en ce que** le décalage angulaire de l'engrènement des pignons dentés (Z1, Z1') sur l'arbre d'entrainement (11, 11') correspond à 1/n dent du pignon denté.

2. Système de propulsion (1) selon l'une des revendications précédentes, dans lequel chaque machine électrique comprend un stator d'axe de machine (Xn) et ledit rotor (22) est équipé de paires de pôles magnétiques (24), les n machines électriques comprenant le même nombre P de paires de pôles magnétiques (24), et dans lequel les axes de machine (Xn) des n machines électriques (2) sont répartis angulairement autour de l'axe de rotation (A) de l'arbre d'entrainement et l'orientation angulaire du stator (21) d'une des machines électriques (2) est décalée selon son propre axe de machine (Xn) par rapport à l'orientation angulaire du stator d'une autre machine électrique d'une valeur d'angle β telle que : β = 360° / [ P x n ].

3. Système de propulsion (1) selon la revendication précédente, dans lequel le carter de transmission (4) supporte les n machines électriques (2) et chaque machine électrique comprend des moyens de positionnement angulaire (55) permettant de positionner individuellement chaque machine électrique par rapport au carter de transmission.

4. Système de propulsion (1) selon l'une des revendications précédentes, dans lequel chaque arbre de sortie (23) de rotor comprend un pignon denté (Z1, Z1'), le pignon denté (Z1) de l'arbre de sortie d'une des machines électriques présente un premier diamètre primitif (Dp1) d'engrènement et le pignon denté (Z1') de l'arbre de sortie d'une autre machine électrique présente un deuxième diamètre primitif (Dp2) différent du premier diamètre primitif.

5. Système de propulsion (1) selon l'une des revendications précédentes, dans lequel le rotor (22) d'une des machines électriques est disposé axialement sur un côté de l'au moins un engrenage (Z1, Z1') de l'arbre d'entrainement et un rotor (22) d'une autre machine électrique est disposé de l'autre côté de l'au moins un engrenage.

6. Système de propulsion (1) selon l'une des revendications précédentes, dans lequel le palier de guidage (50, 50') est disposé axialement selon l'axe de rotation (A, A1, A2) de l'arbre d'entrainement entre au moins deux machines électriques (2).

7. Système de propulsion (1) selon l'une des revendications précédentes, dans lequel les axes de machine (Xn) des n machines électriques (2) et l'axe de rotation (A, A1, A2) de l'arbre d'entrainement sont parallèles entre eux.

8. Système de propulsion (1) selon l'une des revendications précédentes, dans lequel le carter de transmission (4) comporte une paroi externe (41), au moins une surface plane d'appui (42) aménagée sur la paroi externe, ladite surface d'appui (42) définissant un plan (YZ) perpendiculaire à l'axe du palier de guidage (50, 50') pour supporter les n machines électriques, et n ouvertures (43) débouchant dans la ou les surfaces planes d'appui (42), les n ouvertures (43) étant traversées chacune par un arbre de sortie (23) de rotor de machine électrique.

9. Système de propulsion (1) selon l'une des revendications 1 à 8, dans lequel l'arbre d'entrainement (11, 11') comprend une roue dentée commune (Z2, Z2') liée cinématiquement avec l'arbre de sortie (23) de chaque rotor, les n machines électriques (2) étant réparties angulairement autour de la roue dentée commune de sorte à former un réducteur de vitesse (Z1, Z2) entre chaque arbre de sortie de rotor et la roue dentée commune.

10. Système de propulsion (1) selon l'une des revendications 1 à 8, dans lequel l'arbre d'entrainement comprend deux engrenages distincts (Z2, Z3), les arbres de sortie (23) de chaque rotor étant répartis sur les deux engrenages de sorte à former deux réducteurs de vitesse (Z1, Z2 ou Z1, Z3) distincts entre chaque arbre de sortie de rotor et l'engrenage associé.

## Patentansprüche

1. Antriebssystem (1) für ein Elektro- oder Hybridfahrzeug, das in einem orthogonalen Koordinatensystem (XYZ) Folgendes umfasst:
- eine Anordnung von n rotierenden Elektromaschinen (2), wobei n eine ganze Zahl größer oder gleich 2 ist und jede Elektromaschine einen Rotor (22) mit einer um eine Maschinenachse (Xn) drehbaren Abtriebswelle (23) umfasst;
- eine Antriebswelle (11, 11'), die mit mindestens einem Zahnrad (Z2, Z2', Z3) ausgestattet ist, das sich um eine Drehachse (A, A1, A2) der Antriebswelle dreht, das dazu ausgelegt ist, das von den n Elektromotoren (2) gelieferte Drehmoment aufzunehmen, und das kinematisch mit den n Abtriebswellen (23) kinematisch verbunden ist;
- ein Getriebegehäuse (4), das mindestens eine elektrische Maschine und teilweise die Antriebswelle über mindestens ein zur Drehachse (A, A1, A2) der Antriebswelle konzentrisches Führungslager (50, 50') lagert;
wobei die Maschinenachsen (Xn) der n elektrischen Maschinen (2) winkelmäßig um die Drehachse (A, A1, A2) der Antriebswelle verteilt sind und mindestens eine der elektrischen Maschinen gegenüber einer anderen elektrischen Maschine um einen Winkel α versetzt ist, sodass gilt:
α = 360°/n - α1, wobei der Winkel α1 zwischen 3° und 20° liegt, wobei jede Rotor-Abtriebswelle (23) ein Zahnrad (Z1, Z1') umfasst und die Winkelposition des Eingriffs des Zahnrads (Z1, Z1') einer der elektrischen Maschinen (2) auf dem mindestens einen Zahnrad der Antriebswelle gegenüber der Winkelposition des Eingriffs des Zahnrades mindestens einer der anderen elektrischen Maschinen auf demselben Zahnrad oder auf einem anderen Zahnrad der Antriebswelle (11, 11') winkelmäßig versetzt ist,
**dadurch gekennzeichnet, dass** die Winkelverschiebung des Eingriffs der Zahnräder (Z1, Z1') auf der Antriebswelle (11, 11') 1/n Zahn des Zahnrads entspricht.

2. Antriebssystem (1) gemäß einem der vorstehenden Ansprüche, wobei jede elektrische Maschine einen Stator mit Maschinenachse (Xn) umfasst und der Rotor (22) mit Magnetpolpaaren (24) ausgestattet ist, wobei die n elektrischen Maschinen die gleiche Anzahl P an Magnetpolpaaren (24) aufweisen und wobei die Maschinenachsen (Xn) der n elektrischen Maschinen (2) winkelmäßig um die Drehachse (A) der Antriebswelle verteilt sind und die Winkelausrichtung des Stators (21) einer der elektrischen Maschinen (2) ist entlang ihrer eigenen Maschinenachse (Xn) gegenüber der Winkelausrichtung des Stators einer anderen elektrischen Maschine um einen Winkel β versetzt, wobei gilt: β = 360° / [ P × n ].

3. Antriebssystem (1) nach dem vorstehenden Anspruch, wobei das Getriebegehäuse (4) die n elektrischen Maschinen (2) trägt und jede elektrische Maschine Winkelpositionierungsmittel (55) umfasst, die es ermöglichen, jede elektrische Maschine einzeln relativ zum Getriebegehäuse zu positionieren.

4. Antriebssystem (1) nach einem der vorstehenden Ansprüche, wobei jede Rotorausgangswelle (23) ein Zahnrad (Z1, Z1') umfasst, wobei das Zahnrad (Z1) der Abtriebswelle einer der elektrischen Maschinen einen ersten Teilkreisdurchmesser (Dp1) aufweist und das Zahnrad (Z1') der Abtriebswelle einer anderen elektrischen Maschine einen zweiten Teilkreisdurchmesser (Dp2) aufweist, der sich vom ersten Teilkreisdurchmesser unterscheidet.

5. Antriebssystem (1) nach einem der vorstehenden Ansprüche, wobei der Rotor (22) einer der elektrischen Maschinen axial auf einer Seite des mindestens einen Getriebes (Z1, Z1') der Antriebswelle axial angeordnet ist und ein Rotor (22) einer weiteren elektrischen Maschine auf der anderen Seite des mindestens einen Getriebes angeordnet ist.

6. Antriebssystem (1) nach einem der vorstehenden Ansprüche, wobei das Führungslager (50, 50') axial entlang der Drehachse (A, A1, A2) der Antriebswelle zwischen mindestens zwei elektrischen Maschinen (2) angeordnet ist.

7. Antriebssystem (1) nach einem der vorstehenden Ansprüche, wobei die Maschinenachsen (Xn) der n elektrischen Maschinen (2) und die Drehachse (A, A1, A2) der Antriebswelle parallel zueinander verlaufen.

8. Antriebssystem (1) gemäß einem der vorstehenden Ansprüche, wobei das Getriebegehäuse (4) eine Außenwand (41) sowie mindestens eine an der Außenwand angeordnete ebene Auflagefläche (42) aufweist, wobei die Auflagefläche (42) eine zur Achse des Führungslagers senkrechte Ebene (YZ) definiert (50, 50') zur Lagerung der n Elektromaschinen definiert, sowie n Öffnungen (43), die in die ebene Auflagefläche(n) (42) münden, wobei die n Öffnungen (43) jeweils von einer Abtriebswelle (23) eines Elektromaschinenrotors durchsetzt sind.

9. Antriebssystem (1) nach einem der Ansprüche 1 bis 8, wobei die Antriebswelle (11, 11') ein gemeinsames Zahnrad (Z2, Z2') umfasst, das kinematisch mit der Abtriebswelle (23) jedes Rotors verbunden ist, wobei die n elektrischen Maschinen (2) winkelmäßig um das gemeinsame Zahnrad verteilt sind, sodass zwischen jeder Rotor-Abtriebswelle und dem gemeinsamen Zahnrad ein Untersetzungsgetriebe (Z1, Z2) gebildet wird.

10. Antriebssystem (1) nach einem der Ansprüche 1 bis 8, wobei die Antriebswelle zwei getrennte Zahnräder (Z2, Z3) umfasst, wobei die Abtriebswellen (23) jedes Rotors auf die beiden Zahnräder verteilt sind, sodass zwischen jeder Rotor-Abtriebswelle und dem zugehörigen Zahnrad zwei getrennte Untersetzungsgetriebe (Z1, Z2 bzw. Z1, Z3) gebildet werden.

## Claims

1. A propulsion system (1) for an electric or hybrid vehicle, comprising, in an orthogonal coordinate system (XYZ):
- an assembly of n rotary electric machines (2), where n is an integer greater than or equal to two, each electric machine comprising a rotor (22) having an output shaft (23) that is rotatable about a machine axis (Xn);
- a drive shaft (11, 11') provided with at least one gear (Z2, Z2', Z3) of axis of rotation (A, A1, A2) of the drive shaft that is capable of receiving the drive torque provided by the n electric machines (2) and is kinematically connected to the n output shafts (23);
- a transmission casing (4) supporting at least one electric machine and partially supporting the drive shaft by means of at least one guide bearing (50, 50') concentric with the axis of rotation (A, A1, A2) of the drive shaft;
wherein the machine axes (Xn) of the n electric machines (2) are angularly distributed about the axis of rotation (A, A1, A2) of the drive shaft and at least one of the electric machines is angularly offset with respect to another electric machine by an angle α such that:
α = 360°/n - α1 with an angle α1 of between 3° and 20°,
wherein each rotor output shaft (23) comprises a toothed pinion (Z1, Z1'), the angular meshing position of the toothed pinion (Z1, Z1') of one of the electric machines (2) with the at least one gear of the drive shaft being angularly offset with respect to the angular meshing position of the toothed pinion of at least one of the other electric machines with this same gear or with another gear of the drive shaft (11, 11'),
**characterized in that** the angular offset of the meshing of the toothed pinions (Z1, Z1') with the drive shaft (11, 11') corresponds to 1/n tooth of the toothed pinion.

2. The propulsion system (1) as claimed in one of the preceding claims, wherein each electric machine comprises a stator of machine axis (Xn) and said rotor (22) is provided with pairs of magnetic poles (24), the n electric machines comprising the same number P of pairs of magnetic poles (24), and wherein the machine axes (Xn) of the n electric machines (2) are angularly distributed about the axis of rotation (A) of the drive shaft and the angular orientation of the stator (21) of one of the electric machines (2) is offset along its own machine axis (Xn) with respect to the angular orientation of the stator of another electric machine by an angle value β such that: β = 360° / [ P x n ].

3. The propulsion system (1) as claimed in the preceding claim, wherein the transmission casing (4) supports the n electric machines (2) and each electric machine comprises angular positioning means (55) making it possible to position each electric machine individually with respect to the transmission casing.

4. The propulsion system (1) as claimed in one of the preceding claims, wherein each rotor output shaft (23) comprises a toothed pinion (Z1, Z1'), the toothed pinion (Z1) of the output shaft of one of the electric machines has a first meshing pitch diameter (Dp1) and the toothed pinion (Z1') of the output shaft of another electric machine has a second pitch diameter (Dp2) different from the first pitch diameter.

5. The propulsion system (1) as claimed in one of the preceding claims, wherein the rotor (22) of one of the electric machines is positioned axially on one side of the at least one gear (Z1, Z1') of the drive shaft, and a rotor (22) of another electric machine is positioned on the other side of the at least one gear.

6. The propulsion system (1) as claimed in one of the preceding claims, wherein the guide bearing (50, 50') is positioned axially along the axis of rotation (A, A1, A2) of the drive shaft between at least two electric machines (2).

7. The propulsion system (1) as claimed in one of the preceding claims, wherein the machine axes (Xn) of the n electric machines (2) and the axis of rotation (A, A1, A2) of the drive shaft are parallel to each other.

8. The propulsion system (1) as claimed in one of the preceding claims, wherein the transmission casing (4) comprises an external wall (41), at least one planar bearing surface (42) being provided on the external wall, said bearing surface (42) defining a plane (YZ) perpendicular to the axis of the guide bearing (50, 50') in order to support the n electric machines, and n openings (43) that emerge on the planar bearing surface or surfaces (42), an output shaft (23) of a rotor of an electric machine passing through each of the n openings (43).

9. The propulsion system (1) as claimed in one of claims 1 to 8, wherein the drive shaft (11, 11') comprises a common gear (Z2, Z2') kinematically connected to the output shaft (23) of each rotor, the n electric machines (2) being angularly distributed about the common gear so as to form a speed reducer (Z1, Z2) between each rotor output shaft and the common gear.

10. The propulsion system (1) as claimed in one of claims 1 to 8, wherein the drive shaft comprises two separate gears (Z2, Z3), the output shafts (23) of each rotor being distributed on the two gears so as to form two separate speed reducers (Z1, Z2 and Z1, Z3) between each rotor output shaft and the associated gear.
